# EUROPÄISCHE PATENTSCHRIFT

(11) **EP 3 030 404 B1**
(45) Veröffentlichungstag und Bekanntmachung des Hinweises auf die Patenterteilung: **13.06.2018**
(21) Anmeldenummer: 14747381.3
(22) Anmeldetag: 05.08.2014
(51) Int. Cl.: B29C 70/44, B29C 70/54, B29C 33/60, B29C 33/58, B29C 70/18

(54) **VERFAHREN ZUM HERSTELLEN EINES KOMPOSIT-FORMKÖRPERS UND ENTSPRECHENDER KOMPOSIT-FORMKÖRPER**
METHOD FOR PRODUCING A COMPOSITE MOULDED BODY AND CORRESPONDING COMPOSITE MOULDED BODY
PROCÉDÉ DE FABRICATION D'UN ÉLÉMENT FAÇONNÉ COMPOSITE ET ÉLÉMENT FAÇONNÉ COMPOSITE CORRESPONDANT

(30) Priorität: 05.08.2013 DE 102013108430
(43) Veröffentlichungstag der Anmeldung: 15.06.2016
(73) Patentinhaber: Tajik, Mahmoud Reza, 65195 Wiesbaden (DE); Ortho-Nova Gmbh Für Orthopädie-Technik, 65203 Wiesbaden (DE)
(72) Erfinder: TAJIK, Mahmoud Reza, 65195 Wiesbaden (DE)
(74) Vertreter: WSL Patentanwälte Partnerschaft mbB
(86) Internationale Anmeldenummer: PCT/EP2014/066766
(87) Internationale Veröffentlichungsnummer: WO 2015/018809

(56) Entgegenhaltungen:
- EP-A1- 2 184 150
- DE-A1- 4 101 226
- DE-A1- 19 930 000
- DE-A1-102008 014 657
- DE-A1-102008 038 295
- DE-A1-102011 000 945
- DE-A1-102011 114 494
- DE-T2- 60 319 150
- US-A- 5 009 687
- US-A- 5 123 985
- US-A- 5 322 665
- US-A1- 2004 115 299
- US-A1- 2007 108 665

## Beschreibung

Die vorliegende Erfindung betrifft ein Verfahren zum Herstellen eines Komposit-Formkörpers, der aus mehreren Lagen vorimprägnierter Fasern (sog. "Prepregs") besteht, die aufeinander gelegt und unter Druck oder Vakuum miteinander verklebt und anschließend ausgehärtet werden, wobei die übereinander gelegten Lagen in eine luftdichte Hülle eingebracht werden, das Innere der Hülle mit einer Vakuumquelle verbunden und evakuiert wird und der Formkörper zusammen mit der Hülle in einem Ofen ausgehärtet wird.

Ebenso betrifft die Erfindung einen Komposit-Formkörper, der nach einem entsprechenden Verfahren hergestellt wurde.

Ein solches Verfahren und entsprechende Komposit-Formkörper sind bekannt aus der US 5,123,985 A1. Dabei wird zusätzlich ein Kunstharzmaterial in die Hülle eingebracht, welches die Lagen aus Fasern durchdringt und sich mit diesen verbindet.

Darüber hinaus sind auch Komposit-Formkörper bekannt, bei welchen die einzelnen Lagen von Fasern aus sogenannten "Prepregs" bestehen, d.h. aus Lagen aus mit Kunstharz vorimprägnierten Fasern. Komposit-Formkörper sind inzwischen für zahlreiche Anwendungen bekannt, bei denen es einerseits auf eine sehr hohe Festigkeit und andererseits auf geringes Gewicht ankommt. Besonders prominente Beispiele sind die Rümpfe und Tragflächen der neuesten Generation von Großflugzeugen, wobei entsprechende Techniken aber auch schon seit langem für Windräder, im Bootsbau und Kleinflugzeugbau und auch auf anderen Gebieten Verwendung finden.

Für Anwendungen, bei denen es auf eine besondere Steifigkeit und Festigkeit bei kleinen Abmessungen der Komposit-Formkörper ankommt, werden dabei vornehmlich Kompositmaterialien mit Kohlestofffasern verwendet, die hier kurz als "C-Fasern" bezeichnet werden. Beispielsweise werden inzwischen auch die meisten Fahrradrahmen für den Hochleistungsrennsport aus solchen Kohlefaserverbundwerkstoffen hergestellt.

Ein weiterer wichtiger Anwendungsbereich für C-Faser Prepregs und daraus hergestellte Komposit-Formkörper liegt auf dem Gebiet der Orthopädie, da an Prothesen und Orthesen sehr oft ähnlich hohe Anforderungen an Festigkeit, Steifigkeit, Stabilität, geringes Gewicht und geringes Volumen gestellt werden wie auf den vorstehend erwähnten Gebieten.

Kohlefaserprepregs und daraus hergestellte Produkte haben allerdings auch einen Nachteil, da sie sich nur schlecht oder mit erheblichem Aufwand mit anderen Faserprepregs bzw. Verbundwerkstoffen kombinieren lassen und auch ihr optisches Erscheinungsbild für die betreffenden Produkte nicht immer erwünscht ist, da sie generell von schwarzer oder dunkelgrauer Farbe sind und ggf. auch Faser- oder Streifenstrukturen des Fasermaterials sichtbar sind und die Oberfläche Anhaftungen von Hilfsmaterial aufweisen kann.

Bei der Herstellung eines Verbundwerkstoffes aus Kohlefasern werden nach dem Aufeinanderlegen und Verkleben von typischerweise mehreren Lagen aus Prepregs diese Lagen (zum Beispiel angeordnet auf einer porösen Form) von einer abgedichtete Folie umhüllt, die dann evakuiert wird und anschließend in einem Ofen bei ca. 110°C verbacken bzw. ausgehärtet werden. "Verkkleben" bedeutet in diesem Zusammenhang nicht das Aufbringen irgendeines zusätzlichen Klebstoffs. Vielmehr verkleben die Prepregs allein schon beim Aufeinanderlegen, da das entsprechende Matrixmaterial, mit welchem die Fasern imprägniert werden, entsprechende Hafteigenschaften aufweist.

Ein Teil des Matrixmaterials tritt beim Evakuieren aus und verklebt beim Aushärten mit der Hülle, die sich dadurch teilweise auch faltet und aufwirft, was zu einer ungleichmäßigen und unschönen Oberfläche führt.

Das Matrixmaterial ist im Allgemeinen ein Harz, insbesondere ein Kunstharz bzw. Duromer, ein Elastomer oder ein thermoplastisches Material, das schon im nicht gehärteten Zustand mehr oder weniger klebende Eigenschaften hat und aufeinandergelegte und aneinandergedrückte Prepregs zusammenhält, diese aber erst nach dem Aushärten zu einem integrierten Formkörper fest und praktische unlösbar miteinander verbindet.

Will man andere Schichten und insbesondere Prepregs aus anderen Fasern als C-Fasern mit C-Faser-Prepregs verbinden, die eine halbwegs glatte, saubere Oberfläche aus Matrixmaterial haben, so müssten theoretisch Absorptions- und Schutzschichten darüber angeordnet werden, so dass man die Produktoberfläche während des Aushärtens im Ofen nicht mehr sehen kann und auch nicht mehr korrigierend eingreifen könnte. Dies würde zu sehr hohem Ausschuss führen, so dass in der Praxis entsprechende Produkte nicht auf dem Markt und auch nicht bekannt sind.

Je nach Anwendungsbereich können auf entsprechende Kohlefaserverbundwerkstoffe bzw. Komposit-Formkörper Lack oder Farben aufgetragen werden, was aber zusätzliche Arbeitsgänge erfordert und nachteilig für das Gewicht des Endproduktes ist. Darüber hinaus ist die Verarbeitung von Prepregs aus Kohlefasern schwierig und auch fertige Kohlefaserprodukte, die aus mehreren übereinander liegenden Lagen aus C-Faser Prepregs hergestellt sind, die miteinander verklebt, verpresst bzw. evakuiert und ausgehärtet sind, weisen an ihren Rändern in aller Regel scharfe Kanten auf, die leicht Verletzungen hervorrufen können und aus denen auch einzelne Faserbruchstücke austreten können, die bei Kontakt und Einatmen Gesundheitsschäden hervorrufen können. Auch bei Belastung und Bruch von C-Faser-Kompositmaterialien entstehen scharfe, ausgefranste Kanten, die sehr unangenehmen Verletzungen hervorrufen können.

Gegenüber diesem Stand der Technik liegt die der vorliegenden Erfindung die Aufgabe zu Grunde, ein Verfahren zur Herstellung eines Komposit-Formkörpers und einen entsprechenden Komposit-Formkörper zu schaffen, welche mindestens einen Teil der obigen Nachteile nicht aufweisen. In einer bevorzugten Variante wird dabei die Herstellung eines Kompositformkörpers angestrebt, der einerseits die Festigkeit und Steifigkeit und Elastizität von C-Faser-Verbundwerkstoffen hat, andererseits aber ein besseres Biegeverhalten und eine größere Bruchdehnung aufweist und ohne nachträgliches Beschichten bzw. Lackieren ein weitgehend beliebig zu gestaltendes, ansprechendes Äußeres aufweist.

Hinsichtlich des eingangs genannten Verfahrens wird diese Aufgabe dadurch gelöst, dass die Faserlagen Prepregs sind und dass vor dem Evakuieren der Hülle in das Innere der Hülle ein pulverförmiges Gleitmittel eingebracht wird.

Ein solches Gleitmittel führt nach den Feststellungen des Erfinders offenbar dazu, dass sich auch nach dem Aushärten in der Hülle, diese Hülle wieder beschädigungsfrei und ohne Rückstände von dem Formkörper ablösen lässt. Dadurch ist der Formkörper von dem Material der Hülle befreit und die Oberfläche wird allein durch die Oberfläche der obersten Lage eines Prepregs oder einer anderen äußeren Schicht unter der Hülle, sowie das durch diese Lage bzw. Schicht hindurch gedrungene, ausgehärtete Matrixmaterial bestimmt.

Es versteht sich, dass das verwendete Gleitmittel so auszuwählen ist, dass es bei den während der Aushärtung auftretenden Temperaturen zwischen 100 und 120 °C keine Verbindung mit dem Matrixmaterial der Prepregs eingeht.

In einer besonderen Variante ist dabei vorgesehen, dass mind. eine weitere, äußere Lage der Prepregs hauptsächlich aus Fasern besteht, die keine C-Fasern sind, insbesondere Fasern aus der Gruppe sind, die aus Mineralfasern, Naturfasern und Kunststofffasern besteht.

Fast alle derartigen Fasern weisen ein besseres Bruchdehnungsverhalten auf als Kohlenstofffasern, auch wenn sie teilweise nicht zu entsprechend biegesteifen Komposit-Formkörpern führen wie Komposit-Formkörper aus C-Fasern. Die weitere Prepreg-Lage, die nicht aus imprägnierten C-Fasern besteht, tritt vorzugsweise nur auf einer ihrer Seiten mit einer C-Faser-Lage in Kontakt. Konkret bedeutet dies, dass die weitere Lage, bezogen auf eine oder mehrere C-Faserlagen jeweils die äußere Lage bildet, wobei aber nicht ausgeschlossen ist, das auch auf der Außenseite der weiteren Lage noch ein oder mehrere zusätzliche Lagen aufgebracht sind, die nicht aus C-Fasern bestehen und eventuell nicht einmal vorimprägniert sind. Ein Vorteil eines solchen, nicht aus C-Fasern bestehenden Materials liegt darin, dass beim Bearbeiten, insbesondere beim Schleifen, der äußeren Lage kein Kohlefaserstaub entsteht, der als gesundheitsgefährdend einzustufen ist.

Grundsätzlich ist es ebenso gut möglich, dass zusätzlich eine oder mehrere nicht aus C-Fasern bestehende, Lage(n) zwischen C-Faser-Lagen eingebettet ist bzw. sind. Ebenso können auch Körper aus anderen Materialien, wie zum Beispiel aus Metall oder Kunststoff, insbesondere ein Formteil, zwischen C-Faserlagen oder zwischen einer C-Faserlage und einem nicht aus C-fasern bestehenden Prepreg in den Komposit-Formkörper eingebettet sein. Eine solcher in en Komposit-Formkörper integrierter Gegenstand kann vollständig von den Lagen des Kompositmaterials umhüllt sein, oder auch an einer oder mehreren Stellen aus dem Komposit-Formkörper herausragen.

In der Vergangenheit bestand ein Problem vor allem darin, beim Verbinden von Prepregs aus C-Fasern mit Prepregs aus anderen Fasern einen ebenen Flächenkontakt zwischen den Lagen ohne das Aufwerfen von Falten oder Blasen und ohne Verkleben mit einer äußeren Hülle zu gewährleisten. Daher sind bisher solche Formkörper nicht bekannt.

Dieses Problem wird überwunden mittels des entsprechenden Verfahrens zum Herstellen eines Komposit-Formkörpers, bei welchem mehrere Prepregs übereinander gelegt, miteinander verklebt und unter Druck oder Vakuum ausgehärtet werden, wobei mind. eine Lage aus einem C-Faser Prepreg verwendet wird, wobei weiterhin mindestens ein weiteres Prepreg aus einem anderen Fasermaterial der oben genannten Art auf der mind. einen C-Lage aufgebracht und verklebt wird, das so vorbereitete Formteil in eine luftdichte Hülle eingehüllt wird, wobei in das Innere der Hülle ein Gleitmittel eingebracht wird bzw. vor dem Umhüllen bereits in die Hülle eingebracht worden ist. Danach wird das Innere der Hülle in an sich bekannter Weise mit einer Vakuumquelle verbunden und evakuiert. Anschließend wird der Formkörper bei erhöhter Temperatur für mehrere Stunden in der Hülle ausgehärtet.

Die flexible, luftdichte Hülle führt in Verbindung mit dem eingebrachten Gleitmittel dazu, dass die Hülle, während des Evakuierens derselben auf der jeweils mit der Hülle in Kontakt stehenden Schicht gleiten kann, was im Ergebnis dazu führt, dass eine faltenfreie Verbindung zwischen der weiteren Lage und den C-Lagen entsteht. Vor allem aber führt das Gleitmittel dazu, dass die Hülle, die im Allgemeinen aus einer Kunststofffolie besteht, sich anschließend problemlos von der obersten Schicht der miteinander verbundenen Lagen des ausgehärteten Formteils abziehen lässt.

Das ausgehärtete Matrix- bzw. Bindematerial des Komposit-Formteils bildet dabei eine glatte Oberflächenschicht. Insbesondere ist es auch möglich, eine äußere Schicht aus einem Textilmaterial auf der weiteren Schicht aufzubringen, die während des Aushärtens und durch das Vakuumpumpen von dem Matrixmaterial durchtränkt wird, ohne selbst vorimprägniert worden zu sein.. Eine solche Textilschicht, bestimmt dann das äußere optische Erscheinungsbild des Formteils und ist gleichzeitig mit dem Matrixmaterial durchtränkt und integraler Bestandteil des Komposit-formkörpers.

Dabei können die verschiedenen Lagen ihrerseits auch auf eine poröse Form aufgebracht sein, die es ermöglicht, den Formkörper auch von der Seite, mit welcher er an einer Form anliegt, mit Vakuum zu beaufschlagen. Bei einer solchen Variante kann es von Vorteil sein, wenn zwischen Form und Formkörper eine mit Gleitmittel behandelte Folie angeordnet wird.

In einer bevorzugten Ausführungsform der vorliegenden Erfindung enthält die mit der C-Faser-Lage in Kontakt stehende weitere Lage überwiegend oder ausschließlich Fasern aus HPPE (Hochleistungs Polyethylen oder "High Performance Polyethylene), wobei entsprechende Polyethylen Fasern von der Firma Royal DSM N.V. unter der Markenbezeichnung "Dyneema" hergestellt und vertrieben werden.

Die entsprechenden Prepregs sind auch als "Dyneema-Prepregs" bekannt.

Dabei sind außerdem in der bevorzugten Ausführungsform der Erfindung in dem Komposit-Formkörper mehrere C-Faser-Lagen übereinander angeordnet, Beispielsweise mit sukzessiv kleineren Umrissen, um verschiedene Bereiche oder Abschnitte des Formteils mit unterschiedlicher Steifigkeit und Elastizität zu erzeugen, wobei die C-Faser-Lagen so aufeinander angeordnet werden, dass eine Lage mit dem jeweils kleineren Umriss eine vorangehende größere Lage nicht überragt, wobei schließlich auch die weitere Lage, die nicht aus C-Fasern besteht, einen größeren Umriss hat als alle C-Faser-Lagen, sodass die weitere Lage alle C-Faser-Lagen abdeckt.

In der bevorzugten Ausführungsform der Erfindung ist die mind. eine oder ein entsprechender Stapel aus mehreren C-Faser-Lagen auf beiden äußeren Seiten durch jeweils eine weitere Lage abgedeckt, wobei die weiteren Lagen einen im Wesentlichen identischen und größeren Umriss haben als alle C-Faser-Lagen und auf diese Weise die C-Faser-Lagen entlang des gesamten Umfangs überragen und entlang der äußeren, überstehenden Ränder miteinander in direktem Kontakt stehen. Dadurch sind die C-Faser-Lagen vollständig von zwei weiteren Lagen eingehüllt und es entstehen, beispielsweise bei der Verwendung von HPPE als Fasermaterial der äußeren Lagen, keine scharfen äußeren Kanten, die Verletzungen hervorrufen oder kleine Faserbruchstücke absondern könnten, da sich die HPPE-Fasern, trotz einer extrem hohen Zugfestigkeit eher wie Textilfasern verhalten.

Weiterhin kann bei dieser bevorzugten Variante selbst beim Schleifen der Kanten kein Kohlefaserstaub entstehen, der ansonsten beim Schleifen von Formteilen aus Kohlefaserverbundwerkstoffen besondere Schutzmaßnahmen gegen etwaiges Einatmen oder Hautkontakt erfordert.

Der so entstehende Komposit-Formkörper, dessen Außenseiten jeweils durch eine weitere Lage, beispielsweise aus HPPE-Fasern gebildet werden, während mehrere innere Lagen aus C-Faser Prepregs gebildet sind, hat im Wesentlichen die gleiche Steifigkeit und Biegefestigkeit wie ein nur aus den entsprechenden C-Lagen hergestellter Komposit-Formkörper. Gleichzeitig hat dieser Formkörper aber ein deutlich besseres Bruchdehnungsverhalten und kann deshalb bei Einwirken größerer Biegekräfte stärker gebogen werden ohne zu brechen, wobei selbst bei einem Bruch zunächst nur die inneren C-Faser-Lagen brechen, nach wie vor aber von den weiteren Lagen eingehüllt sind, deren Fasern weniger leicht brechen, insbesondere wenn sie aus HPPE bestehen.

Darüber hinaus kann auch die weitere Lage von einer zusätzlichen Lage abgedeckt sein, die nicht notwendigerweise ein vorimprägniertes Prepreg-Material sein muss, sondern beispielsweise auch eine dünne Folie oder eine dünne Textil-Lage sein kann. Eine solche weitere Lage wird in gleicher Weise auf dem Komposit-Formkörper angeordnet, wie die zuvor beschriebene weitere Lage auf den C-Fasern angeordnet wurde und ebenfalls in einer flexiblen Hülle mit Gleitmittel angeordnet, woraufhin die Hülle evakuiert und das gesamte Paket ausgehärtet wird, sodass auf diese Weise auch die zusätzliche Lage mit der darunter liegenden weiteren Lage fest verbunden wird. Das Aushärten kann gegebenenfalls auch stufenweise erfolgen.

Als Hülle für die entsprechenden Formkörper wird vorzugsweise ein PVA-Folienschlauch verwendet.

Das verwendete Gleitmittel ist erfindungsgemäß ein pulverförmiges Gleitmittel, insbesondere ein für Silikon- und Urethan vorgesehenes Gleitmittel, wie es beispielsweise von der Firma Otto Bock in D37115 Duderstadt als pulverförmiges Spezialgleitmittel für Silikone- und Urethane erhältlich ist.

Die vorliegende Erfindung ist insbesondere gut geeignet für die Herstellung von Prothesen oder Orthesen ohne weitere Tragstruktur, da entsprechende Formkörper in sich so stabil hergestellt werden können, dass sie beispielsweise menschliche Gliedmaßen wie z.B. Unterschenkel ersetzen oder unterstützen und das Gewicht eines Menschen tragen können. Es versteht sich, dass auch entsprechende Prothesen- und Orthesenteile ggf. noch zusätzliche Gelenkelemente und der gleichen aufweisen können. Bei der Anwendung für Prothesen- und Orthesen haben die erfindungsgemäßen Komposit-Formkörper den entscheidenden Vorteil, dass sie ohne nachträgliches Lackieren oder Beschichten unmittelbar mit einer äußeren Schicht hergestellt werden können, die eine gewünschte Farbe oder ein gewünschtes Muster aufweist. Die äußere Lage kann beispielsweise eine hautfarbende oder Hautstrukturen wiedergebende Textil- oder Folienschicht sein, die integrierter Bestandteil des Komposit-Formkörpers ist, wobei eine entsprechend Folienschicht vorzugsweise porös wäre.

Weitere Vorteile, Merkmale und Anwendungsmöglichkeit der vorliegenden Erfindung werden deutlich anhand der vollständigen Beschreibung eines Ausführungsbeispiels und der dazugehörigen Figuren.

In dem folgenden Ausführungsbeispiel wird die Herstellung eines orthopädischen Fußsohlenteiles beschrieben.
- Figur 1: zeigt schematisch eine Draufsicht auf ein orthopädisches Fußsohlenteil,
- Figur 2: zeigt wiederum schematisch eine Schichtfolge von Prepregs, aus welchem das Fußsohlenteil gemäß Figur 1 bestehen könnte, und
- Figur 3: zeigt ein entsprechendes, auf einer Form angeordnetes Fußsohlenteil in einer Hülle mit Gleitmittel vor dem Evakuieren und Aushärten.

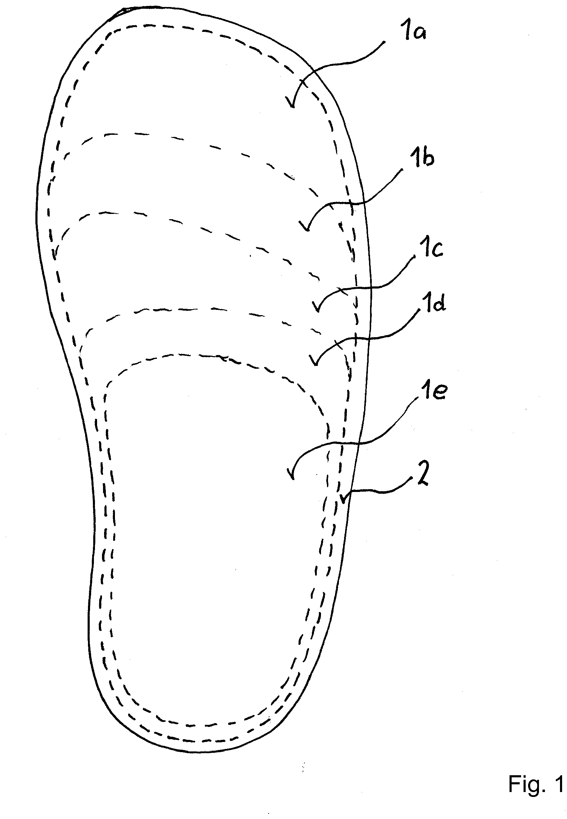

Man erkennt in Figur 1 schematisch die Draufsicht auf ein Fußsohlenteil 10, die zum Beispiel eine orthopädischen Schuheinlage oder auch Teil einer Prothese oder Orthese sein kann, wobei das Fußsohlenteil 10 über geeignete Gelenke und gegebenenfalls auch eine integrale Verlängerung mit einer Unterschenkelmanschette verbunden sein kann.

In dem dargestellten Ausführungsbeispiel besteht das Fußsohlenteil 10 aus mehreren Lagen von Prepregs, nämlich einem ersten Dyneema-Prepreg 2, sowie mehreren C-Faser-Prepregs 1a-1e, die sukzessive kleinere Umrisse haben als das jeweils vorangehende Prepreg. Auf dem Dyneema-Prepreg 2 ist zunächst ein C-Faser-Prepreg 1a aufgebracht, dessen Umriss umlaufend geringfügig kleiner und gegenüber dem Rand des Prepregs 2 nach innen versetzt ist. Die weiteren Prepregs 1b, 1c und 1d, die auf dem Prepreg 1a bzw. sukzessive aufeinander aufgebracht sind, haben im hinteren bzw. unteren Teil der Fußsohle den gleichen Umriss wie das Prepreg 1a, sind jedoch nach vorn zur Fußspitze hin kürzer ausgebildet, was dazu führt, dass das fertige Formteil im vorderen Teil dünner und damit elastischer und nachgiebiger wird. Ein weiteres C-Faser-Prepreg 1e hat schließlich einen nochmals verkleinerten Umriss gegenüber den vorangehenden Prepregs und verstärkt den hinteren zentralen Teil der Fußsohle 10.

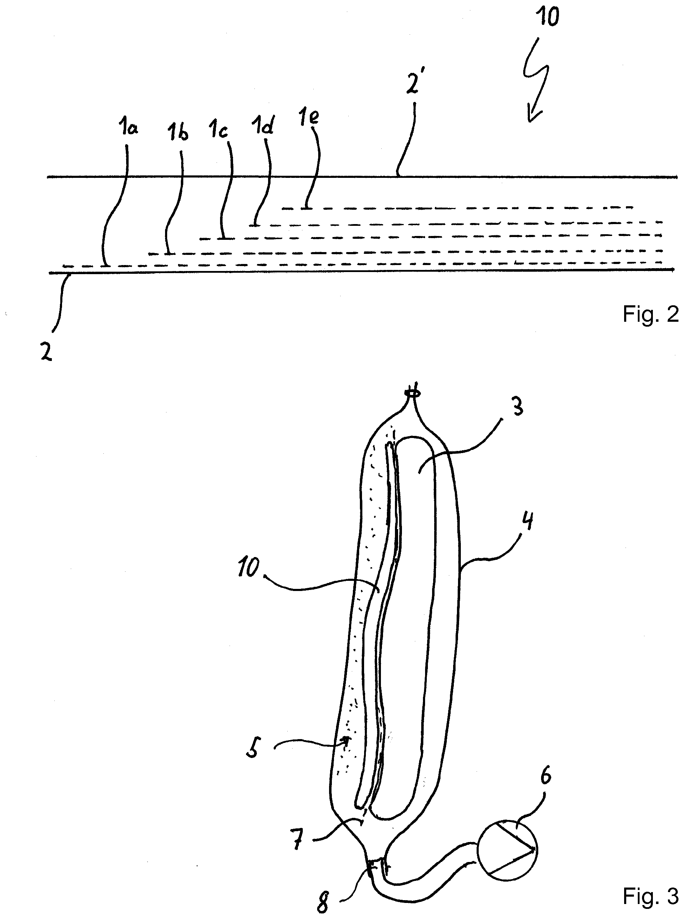

Nicht dargestellt ist in Figur 1 ein weiteres Prepreg 2', welches noch über den C-Faser-Lagen 1 a-1e aufgebracht wird und deckungsgleich mit dem Prepreg 2 ist, so dass dessen äußere überstehenden Kanten miteinander verklebt und verbunden werden können. Dass Prepreg 2' ist jedoch in Figur 2 sichtbar.

Figur 2 zeigt rein schematisch die Folge der Schichten bzw. Prepreg-Lagen 2, 1a-1e und 2' entsprechend einem stark überhöht gezeichneten Längsschnitt von der Ferse zur Spitze des Fußsohlenteils 10. In der Praxis hat das Fußsohlenteil 10 eine Dicke von nur 1 bis 2 mm, wobei die Dicke der erfindungsgemäßen Formteile in weiten Bereichen zwischen etwa 0,1 mm und mehreren cm variieren kann.

Figur 3 veranschaulicht eine Variante des erfindungsgemäßen Verfahrens zur Herstellung eines entsprechenden Komposit-Formkörpers 10. Der aus derselben oder einer ähnlichen Schichtenfolge wie in Figur 1 und 2 aufgebaute Komposit-Formkörper 10 ist in diesem Fall schichtweise auf der Form 3 aufgebracht und dieser Form angepasst worden. Die Form kann beispielsweise der Abdruck eines natürlichen Körperteils sein. Auch hier ist das Formteil 10 im Verhältnis zur Länge deutlich dicker dargestellt als es der Realität entspricht.

Die einzelnen Prepreg-Lagen können zunächst entweder in einer ebenen Fläche übereinander gelegt und verklebt werden und danach an die Formoberfläche angedrückt bzw. angeformt werden oder aber nacheinander direkt auf die Form und die jeweils vorangehende Schicht bzw. Prepreg-Lage aufgebracht werden. Gemäß einer Variante könnte zwischen der Form 3 und dem Formkörper 10 zunächst auch noch eine mit Gleitmittel beschichtete Folie 7 aufgebracht werden, die auf einer Seite mit dem Formteil 3 verklebt sein kann und auf der dem Formteil 10 zugewandten Seite eine Gleitmittelbeschichtung aufweist. Das Gleitmittel ist erfindungsgemäß ein pulverförmiges Gleitmittel, wie es in der Orthopädie für Silikon- und Urethan-Bauteile Verwendung findet und beispielsweise von der Firma Otto Bock in Duderstadt erhältlich ist.

In jedem Fall wird das Formteil 10 mit oder ohne Form 3 in eine äußere, luftdichte Hülle 4 eingebracht, wobei in diese zuvor ein pulverförmiges Gleitmittel 5, welches hier nur schematisch in Form von kleinen Punkten angedeutet ist, in die Hülle eingebracht wurde.

Je nach Größe des Formteils 10 reichen Bruchteile eines Gramms oder ein oder mehrere Gramm des pulverförmigen Gleitmittels aus, um die Innenfläche der äußeren Hülle ausreichend mit dem Gleitmittel 5 zu bedecken. Die äußere Hülle ist vorzugsweise ein PVA-Schlauch, dessen oberes Ende durch einen Clip oder mit Hilfe eines wärmebeständigen Bandes luftdicht angeschlossen ist.

Am unteren Ende ist die vorzugsweise aus PVA-Material bestehende Hülse 4 abgedichtet mit einem Ansaugstutzen 8 einer Pumpe 6 verbunden, mit deren Hilfe die Hülle 4 für einige Minuten bis zu beispielsweise einer Stunde evakuiert wird, wobei überschüssiges Matrixmaterial aus dem Formkörper austritt. Anschließend wird die gesamte Hülle, vorzugsweise mit dem wieterhin angeschlossenen Ansaugstutzen 8 und bei fortgesetztem Vakuumpumpen, in einen Wärmeofen eingebracht, der die Hülle 4 einschließlich aller darin aufgenommenen Teile auf eine Temperatur von beispielsweise 100-120°C aufheizt, wobei weiteres Matrixmaterial der verwendeten Prepregs aus dem Formkörper austritt und beispielsweise durch die Form aufgenommen wird und im Übrigen aushärtet und alle Prepreg-Lagen zu einem integralen Formkörper unlösbar miteinander verbindet.

Der Aushärtevorgang kann mehrere Stunden in Anspruch nehmen, wobei die Verwendung einer PVA-Hülle es ermöglicht, die Oberfläche des Formteils 10 zu beobachten und gegebenenfalls einzugreifen, um beim Entstehen irgendwelcher Unregelmäßigkeiten das Matrixmaterial gleichmäßiger zu verteilen und Unebenheiten zu glätten.

Das optische Erscheinungsbild des entsprechenden Formkörpers 10 wird dann maßgeblich durch das Aussehen der äußeren Prepreg-Lagen bestimmt, im Falle des Ausführungsbeispiels der Figuren 1 und 2 also durch entsprechende Dyneema-Prepregs. Vor dem Aushärten kann aber gegebenenfalls auf dem Dyneema-Prepreg auch eine Lage aus einem textilen Material aufgebracht werden, die während des Aushärtens mindestens einen Teil des austretenden Matrixmaterials aufnimmt, dadurch imprägniert wird und ebenfalls integraler Bestandteil des Komposit-Formkörpers wird. Gegebenenfalls ist es auch möglich, eine solche Textilschicht nachträglich, nach dem Aushärten des Formkörpers 10 aufzubringen und diesen nochmals zu erwärmen und/oder eine entsprechende ungehärtete Matrixschicht auf dem Formteil aufzubringen, um auf diese Weise die äußere Textilschicht mit dem Formteil fest zu verbinden.

Auch dabei wird wiederum eine mit Gleitmittel 5 versehene Hülle verwendet, die es ermöglicht, nach dem Aufbringen und Aushärten des Formteils einschließlich der oberen Textilschichten die Hülle 4 wieder problemlos von dem Formteil abzuziehen und zu entfernen. Das Formteil kann auch beidseitig mit einer entsprechenden Textillage versehen werden, insbesondere wenn eine entsprechende Form 3 nicht benötigt wird.

Die erfindungsgemäße Verwendung eines pulverförmigen Gleitmittels ermöglicht also entsprechende Komposit-Formkörper aus Prepregs mit unterschiedlichsten Fasern und Kombinationen hieraus mit einer glatten, sauberen Oberfläche herzustellen, ohne dass das Hüllenmaterial, welches bei dem entsprechenden Herstellungsverfahren während des Evakuierens und Aushärtens benötigt wird, an dem Formteil haftet, wobei auch die mechanischen Eigenschaften des Formteils in weiten Bereichen variiert und verbessert werden können, und die Oberfläche in Ihrem Aussehen nahezu beliebig gestaltet werden kann.

## Patentansprüche

1. Verfahren zum Herstellen eines Kompositformkörpers (10), bei welchem mehrere Lagen aus Prepregs (1,2) übereinandergelegt, miteinander verklebt und unter Druck und/oder Vakuum ausgehärtet werden, wobei
- die übereinander gelegten Lagen aus Prepregs in eine luftdichte Hülle (4) eingebracht werden,
- das Innere der Hülle mit einer Vakuumquelle verbunden und evakuiert wird
- und der Formkörper zusammen mit der Hülle in einem Ofen ausgehärtet wird,
wobei vor dem Evakuieren der Hülle in das Innere der Hülle ein pulverförmiges Gleitmittel (5) eingebracht wird.

2. Verfahren nach Anspruch 1, **dadurch gekennzeichnet, dass** als Hülle ein PVA Folienschlauch verwendet wird.

3. Verfahren nach einem der Ansprüche 1 oder 2, **dadurch gekennzeichnet, dass** als Gleitmittel ein für Silikon und Urethan vorgesehenes Gleitmittel verwendet wird.

4. Verfahren nach einem der Ansprüche 1 - 3, **dadurch gekennzeichnet, dass** mindestens eine Lage aus einem Kohlefaser-Prepreg, d.H. C-Faser Prepreg (1), verwendet wird, wobei
a) mindestens ein weiteres Prepreg (2) aus einem anderen Fasermaterial auf der mindestens einen C-Lage aufgebracht und verklebt wird,
b) das so vorbereitete Formteil in eine luftdichte Hülle eingehüllt wird,
c) in das Innere der Hülle ein Gleitmittel eingebracht wird
d) das Innere der Hülle mit einer Vakuumquelle verbunden wird und evakuiert wird,
e) und der Formkörper bei erhöhter Temperatur ausgehärtet wird wobei das weitere Prepreg hauptsächlich aus Fasern besteht, die keine C-Fasern sind, und insbesondere Fasern der Gruppe enthält, die aus Mineralfasern, Naturfasern und Kunststoffasern besteht.

5. Verfahren nach Anspruch 4, **dadurch gekennzeichnet, dass** als weiteres Prepreg ein Prepreg aus HPPE, d.H. Hochleistungspolyethylen, verwendet wird.

6. Verfahren nach einem der Ansprüche 4 oder 5 **dadurch gekennzeichnet, dass** eine oder mehrere C-Prepregs aufeinandergelegt und beidseitig mit je einem HPPE-Prepreg abgedeckt werden, die gegenüber dem Umriss der C-Prepregs überstehen und diese Lagen in die mit Gleitmittel versehene Hülle eingebracht werden.

7. Verfahren nach einem der Ansprüche 4 - 6, **dadurch gekennzeichnet, dass** auf mindestens einer der weiteren Lagen auf ihrer den C-Faser-Lagen abgewandten Seite eine Folie (7) oder eine Textilmateriallage aufgebracht und zusammen mit den Prepreg-Lagen mit Gleitmittel in eine Hülle eingebracht wird, die anschließend evakuiert wird.

8. Verfahren nach einem der Ansprüche 1 -7, **dadurch gekennzeichnet, dass** der aus übereinandergelegten Prepregs bestehende, noch nicht ausgehärtete Formkörper auf eine poröse Form (3) aufgebracht und gemeinsam mit der Form in die luftdichte Hülle eingebracht werden.

9. Verfahren nach Anspruch 8, **dadurch gekennzeichnet, dass** die Form der Abdruck oder die Abformung bzw. Nachbildung eines menschlichen Körperteils ist.

10. Verfahren nach einem der Ansprüche 8 oder 9, **dadurch gekennzeichnet, dass** zwischen der Form und dem Formkörper eine Folie eingelegt wird, die mindestens auf der dem Formkörper zugewandten Seite mit einem Gleitmittel versehen ist.

11. Kompositformkörper (10), welcher aus mehreren Lagen (1,2) miteinander verbundener, vorimprägnierter Fasern, d.H. Prepregs, besteht, die aufeinandergelegt und dadurch miteinander verklebt und in einer Hülle (4) evakuiert und anschließend in der Hülle ausgehärtet sind, wobei der Formkörper nach einem Verfahren gemäß einem der Ansprüche 1 bis 10 hergestellt worden ist und eine während des Aushärtens mit der Hülle in Kontakt stehende Oberfläche des Formkörpers vollständig von dem Material der Hülle befreit ist.

12. Kompositformkörper nach Anspruch 11, **dadurch gekennzeichnet, dass** mindestens eine der Prepreg-Lagen mindestens überwiegend Kohlenstofffasern, d.H. C-Fasern, aufweist und dass mindestens eine weitere Lage hauptsächlich aus Fasern besteht, die keine C-Fasern sind und insbesondere Fasern der Gruppe enthält, die aus Mineralfasern, Naturfasern und Kunststoffasern besteht.

13. Kompositformkörper nach Anspruch 12, **dadurch gekennzeichnet, dass** die mit einer C-Faser-Lage in Kontakt stehende weitere Lage überwiegend oder ausschließlich HPPE-Fasern, d.H. Hochleistungspolyethylenfasern, enthält.

14. Kompositformkörper nach einem der Ansprüche 12 oder 13, **dadurch gekennzeichnet, dass** der Umriss der mindestens einen C-Faser- Lage vollständig innerhalb des Umrisses der weiteren Lage liegt

15. Kompositformkörper nach einem der Ansprüche 12 - 14, **dadurch gekennzeichnet, dass** die mindestens eine C-Faser-Lage auf beiden Seiten jeweils von mindestens einer der weiteren Lagen abgedeckt ist.

16. Kompositformkörper nach einem der Ansprüche 12 - 15, **dadurch gekennzeichnet, dass** zwei die C-Faser-Lage beidseitig abdeckende weitere Lagen außerhalb des Umrisses der C-Faser-Lage direkt miteinander verbunden sind.

17. Kompositformkörper nach einem der Ansprüche 12 - 16, **dadurch gekennzeichnet, dass** die weitere Lage auf mindestens einer Seite des Formkörpers von einer nicht vorimprägnierten Lage eines Textilmaterials oder einer Kunststofffolie abgedeckt ist.

18. Kompositformkörper nach einem der Ansprüche 11 - 17, **dadurch gekennzeichnet, dass** der Formkörper mindestens zwei und vorzugsweise mindestens drei übereinanderliegende Lagen aus C-Faser-Prepregs aufweist.

19. Kompositformkörper nach einem der Ansprüche 11 - 18, **dadurch gekennzeichnet, dass** übereinanderliegende C-Faser-Lagen sukzessiv kleinere Umrisse aufweisen und jeweils den Umrisses der vorangehenden Lage nicht überragen, wobei die C-Faser-Lage mit dem größten Umriss mit einer weiteren Lage in Kontakt steht.

20. Kompositformkörper nach einem der Ansprüche 11 - 19, **dadurch gekennzeichnet, dass** das Formteil mindestens Teil einer Prothese oder Orthese ist.

21. Komposit-Formkörper nach einem der Ansprüche 11 bis 20, **dadurch gekennzeichnet, dass** ein Gegenstand aus Metall oder einem anderen Material, insbesondere ein Formteil, in den Komposit-Formkörper integriert ist.

## Claims

1. Method for producing a composite moulded body (10) in which several layers of prepregs (1, 2) are laid over one another, adhesively bonded to each other and cured under pressure and/or vacuum, wherein
- the prepreg layers laid over one another are introduced into an airtight shell (4),
- the interior of the shell is connected to a vacuum source and evacuated
- and the moulded body is cured together with the shell in a furnace,
wherein a powder antifriction agent (5) is introduced into the interior of the shell before the evacuation of the shell.

2. Method according to claim 1, **characterized in that** a PVA film tube is used as shell.

3. Method according to one of claims 1 or 2, **characterized in that** an antifriction agent provided for silicone and urethane is used as antifriction agent.

4. Method according to one of claims 1 - 3, **characterized in that** at least one layer made of a carbon fiber prepreg, i.e. C fiber prepreg (1), is used, wherein
a) at least one further prepreg (2) made of another fiber material is applied to the at least one C layer and adhesively bonded,
b) the moulded part prepared in this way is encased in an airtight shell,
c) an antifriction agent is introduced into the interior of the shell
d) the interior of the shell is connected to a vacuum source and evacuated,
e) and the moulded body is cured at increased temperature
wherein the further prepreg consists mainly of fibers which are not C fibers, and in particular contains fibers from the group which consists of mineral fibers, natural fibers and plastic fibers.

5. Method according to claim 4, **characterized in that** a prepreg made of HPPE, i.e. high-performance polyethylene, is used as further prepreg.

6. Method according to one of claims 4 or 5, **characterized in that** one or more C prepregs are laid over one another and each covered on both sides with a HPPE prepreg, which project beyond the outline of the C prepregs and these layers are introduced into the shell provided with antifriction agent.

7. Method according to one of claims 4 - 6, **characterized in that** a film (7) or a textile material layer is applied to at least one of the further layers on the side of it facing away from the C fiber layers and is introduced together with the prepreg layers with antifriction agent into a shell which is subsequently evacuated.

8. Method according to one of claims 1 - 7, **characterized in that** the moulded body consisting of prepregs laid over one another which is not yet cured is applied to a porous mould (3) and introduced together with the mould into the airtight shell.

9. Method according to claim 8, **characterized in that** the mould is the cast or the plastic impression or replica of a human body part.

10. Method according to one of claims 8 or 9, **characterized in that** a film, which is provided with an antifriction agent at least on the side facing the moulded body, is inserted between the mould and the moulded body.

11. Composite moulded body (10) which consists of several layers (1, 2) of pre-impregnated fibers, i.e. prepregs, which are joined to each other, which are laid over one another and thereby adhesively bonded to each other and evacuated in a shell (4) and subsequently cured in the shell, wherein the moulded body has been produced according to a method according to one of claims 1 to 10 and a surface of the moulded body which is in contact with the shell during the curing is completely freed from the material of the shell.

12. Composite moulded body according to claim 11, **characterized in that** at least one of the prepreg layers has at least predominantly carbon fibers, i.e. C fibers, and **in that** at least one further layer consists mainly of fibers which are not C fibers, and in particular contains fibers from the group which consists of mineral fibers, natural fibers and plastic fibers.

13. Composite moulded body according to claim 12, **characterized in that** the further layer in contact with a C fiber layer contains primarily or exclusively HPPE fibers, i.e. high-performance polyethylene fibers.

14. Composite moulded body according to one of claims 12 or 13, **characterized in that** the outline of the at least one C fiber layer lies completely within the outline of the further layer.

15. Composite moulded body according to one of claims 12 - 14, **characterized in that** the at least one C fiber layer is covered on both sides in each case by at least one of the further layers.

16. Composite moulded body according to one of claims 12 - 15, **characterized in that** two further layers covering the C fiber layer on both sides are joined directly to each other outside of the outline of the C fiber layer.

17. Composite moulded body according to one of claims 12 - 16, **characterized in that** the further layer is covered on at least one side of the moulded body by a layer of a textile material which is not pre-impregnated or a plastic film.

18. Composite moulded body according to one of claims 11 - 17, **characterized in that** the moulded body has at least two and preferably at least three layers made of C fiber prepregs lying over one another.

19. Composite moulded body according to one of claims 11 - 18, **characterized in that** C fiber layers lying over one another have successively smaller outlines and in each case do not protrude beyond the outline of the previous layer, wherein the C fiber layer with the largest outline is in contact with a further layer.

20. Composite moulded body according to one of claims 11 - 19, **characterized in that** the moulded part is at least part of a prosthesis or orthosis.

21. Composite moulded body according to one of claims 11 to 20, **characterized in that** an article made of metal or another material, in particular a moulded part is integrated into the composite moulded body.

## Revendications

1. Procédé de fabrication d'un élément façonné composite (10) dans lequel plusieurs couches de prépreg (pré-imprégné) (1, 2) sont superposées, collées les unes aux autres et durcies sous pression et/ou sous vide,
- les couches superposées de prépreg étant introduites dans une enveloppe (4) étanche à l'air,
- l'intérieur de l'enveloppe étant relié à une source de vide et évacué, et
- l'élément façonné, ensemble avec l'enveloppe, étant durci dans un four,
un lubrifiant (5) en poudre étant introduit à l'intérieur de l'enveloppe avant l'évacuation de l'enveloppe.

2. Procédé selon la revendication 1, **caractérisé en ce qu'**une gaine en feuille de PVA est utilisée comme enveloppe.

3. Procédé selon l'une des revendications 1 ou 2, **caractérisé en ce qu'**un lubrifiant pour silicone ou uréthane est utilisé comme lubrifiant.

4. Procédé selon l'une des revendications 1 à 3, **caractérisé en ce qu'**au moins une couche en un prépreg en fibres de carbone, c'est-à-dire en un prépreg en fibres en C (1), est utilisée,
a) au moins un autre prépreg (2) en un autre matériau en fibres étant posé et collé sur ladite au moins une couche C,
b) l'élément façonné ainsi préparé étant enveloppé dans une enveloppe étanche à l'air,
c) un lubrifiant étant introduit dans l'intérieur de l'enveloppe,
d) l'intérieur de l'enveloppe étant relié à une source de vide et évacué, et
e) l'élément façonné étant durci à une température élevée,
ledit autre prépreg consistant essentiellement en des fibres qui ne sont pas des fibres en C et comprenant notamment des fibres du groupe constitué de fibres minérales, de fibres naturelles et de fibres synthétiques.

5. Procédé selon la revendication 4, **caractérisé en ce qu'**est utilisé comme autre prépreg, un prépreg en HPPE, c'est-à-dire en polyéthylène de hautes performances.

6. Procédé selon l'une des revendications 4 ou 5, **caractérisé en ce qu'**un ou plusieurs prépreg en C sont superposés et recouverts des deux côtés d'un prépreg en HPPE respectif qui dépassent les contours des prépreg en C, et **en ce que** ces couches sont introduites dans l'enveloppe pourvue d'un lubrifiant.

7. Procédé selon l'une des revendications 4 à 6, **caractérisé en ce que** sur au moins une des autres couches, sur son côté détourné des couches C, un film ou une couche en matière textile est appliqué(e) et est introduite, ensemble avec les couches prépreg et avec un lubrifiant, dans une enveloppe qui est ensuite évacuée.

8. Procédé selon l'une des revendications 1 à 7, **caractérisé en ce que** l'élément façonné constitué de prépreg superposés, mais non encore durci, est appliqué sur un moule (3) poreux et est introduit, ensemble avec le moule, dans l'enveloppe étanche à l'air.

9. Procédé selon la revendication 8, **caractérisé en ce que** le moule est une empreinte ou un moulage ou la reproduction d'une partie d'un corps humain.

10. Procédé selon l'une des revendications 8 ou 9, **caractérisé en ce qu'**un film est interposé entre le moule et l'élément façonné, qui est pourvu, au moins sur le côté en regard de l'élément façonné, d'un lubrifiant.

11. Elément façonné en composite (10) qui est constitué de plusieurs couches (1, 2) de fibres pré-imprégnées attachées les unes aux autres, c'est-à-dire de prépreg, qui sont superposées et ainsi collées les unes aux autres et évacuées dans une enveloppe (4) et ensuite durcies dans l'enveloppe, l'élément façonné ayant été fabriqué selon un procédé selon l'une des revendications 1 à 10 et une surface de l'élément façonné qui, pendant le durcissement, a été en contact avec l'enveloppe, étant entièrement libérée du matériau de l'enveloppe.

12. Elément façonné en composite selon la revendication 11, **caractérisé en ce qu'**au moins une des couches de prépreg comprend principalement des couches de fibres de carbone, c'est-à-dire des fibres en C, et **en ce qu'**au moins une autre couche est constituée de fibres qui ne sont pas des fibres en C et comprend notamment des fibres du groupe constitué de fibres minérales, de fibres naturelles et de fibres synthétiques.

13. Elément façonné en composite selon la revendication 12, **caractérisé en ce que** ladite autre couche qui est en contact avec une couche de fibres en C, comprend essentiellement ou exclusivement des fibres HPPE, c'est-à-dire des fibres en polyéthylène de hautes performances.

14. Elément façonné en composite selon l'une des revendications 12 ou 13, **caractérisé en ce que** les contours de ladite au moins une couche en fibres en C sont situés entièrement à l'intérieur des contours de ladite autre couche.

15. Elément façonné en composite selon l'une des revendications 12 à 14, **caractérisé en ce que** ladite au moins une couche en fibres en C est recouverte, respectivement sur les deux côtés, d'au moins une desdites autres couches.

16. Elément façonné en composite selon l'une des revendications 12 à 15, **caractérisé en ce que** deux autres couches recouvrant la couche en fibres en C des deux côtés, sont reliées directement l'une à l'autre en dehors des contours de la couche en fibres en C.

17. Elément façonné en composite selon l'une des revendications 12 à 16, **caractérisé en ce que** ladite autre couche est recouverte, sur au moins un côté de l'élément façonné, d'une couche non pré-imprégnée d'un matériau textile ou d'un film en matière synthétique.

18. Elément façonné en composite selon l'une des revendications 11 à 17, **caractérisé en ce que** l'élément façonné comprend au moins deux et de préférence trois couches superposées en prépreg en fibres en C.

19. Elément façonné en composite selon l'une des revendications 11 à 18, **caractérisé en ce que** les couches superposées en fibres en C présentent des contours successivement plus petits et ne dépassent pas les contours de la couche précédente, la couche en fibres en C ayant les contours les plus grands étant en contact avec une autre couche.

20. Elément façonné en composite selon l'une des revendications 11 à 19, **caractérisé en ce que** l'élément façonné constitue au moins une partie d'une prothèse ou orthèse.

21. Elément façonné en composite selon l'une des revendications 11 à 20, **caractérisé en ce qu'**un objet en métal ou en un autre matériau, notamment un élément façonné, est intégré dans l'élément façonné en composite.
